# EUROPEAN PATENT SPECIFICATION

(11) **EP 1 706 296 B1**
(45) Date of publication and mention of the grant of the patent: **27.02.2008**
(21) Application number: 05704724.3
(22) Date of filing: 19.01.2005
(51) Int. Cl.: B60R 21/18, B60R 21/239

(54) **AN AIR-BAG ARRANGEMENT**
AIRBAG-ANORDNUNG
SYSTEME DE COUSSIN DE SECURITE GONFLABLE

(30) Priority: 19.01.2004 GB 0401096
(43) Date of publication of application: 04.10.2006
(73) Proprietor: AUTOLIV DEVELOPMENT AKTIEBOLAG, 447 83 Vargarda (SE)
(72) Inventor: BRONNER, Jérôme, FR-76220 Gournay en Bray (FR); OUALLET, Pascal, F-60850 Saint Pierre des Champs (FR)
(74) Representative: Parry, Simon James
(86) International application number: PCT/SE2005/000050
(87) International publication number: WO 2005/068267

(56) References cited:
- EP-A2- 1 273 487
- JP-A- 11 189 118
- JP-A- 2001 213 256
- US-A1- 2002 074 784

## Description

**THE PRESENT INVENTION** relates to an air-bag arrangement and more particularly relates to an air-bag arrangement of the bag-in-belt type.

It has been proposed previously to mount an air-bag on part of a lap- and-diagonal (or 3-point) safety-belt. Frequently the bag is mounted on the lap part of the belt.

If an air-bag is mounted in position in this way the air-bag, when inflated, may have a precisely predetermined position relative to the seat occupant. This is an advantage in comparison with other prior proposed air-bags, where the air-bag is mounted in the steering-wheel or dashboard, since in such a situation the position of the seat occupant relative to the air-bag does depend very much upon the adjustment of the seat. A short seat occupant, who may have the seat in a forward position, may thus be located much closer to the air-bag than a tall seat occupant, who may adjust the seat to a rear-most position.

Any air-bag must have a desired inflation characteristic and it is desirable for an air-bag to inflate in a modified manner if the seat occupant to be protected by the air-bag is not in the ordinary position.

It has, for example, been determined that a bag-in-belt arrangement may actually impart injuries to a seat occupant if the seat occupant is leaning forward (or is "out-of-position) at the instant that the air-bag inflates. The seat occupant may, for example, be leaning forward to obtain access to the glove box, or even to retrieve an item from the floor of the vehicle or to tie shoe laces.

JP 2001 213256 A discloses an air-belt arrangement according to the preamble of claim 1, having an airbag with a vent hole to reduce internal pressure of the bag to a suitable value.

JP 11 189 118 A discloses a further air-belt having an airbag and a pressure-producing vent hole.

It is, therefore, desirable to provide an air-bag which will have an appropriate inflation characteristic, that which will be such that the risk of injury occurring to a seat occupant, should the air-bag inflate when the seat occupant is out-of-position, is reduced or obviated.

The present invention seeks to provide an improved air-bag arrangement.

According to the present invention, there is provided an air-bag arrangement the air-bag arrangement incorporating an air-bag and at least one mount to mount the air-bag on part of a safety-belt, the air-bag being provided with a gas supply arrangement to supply gas to an inlet region of the air-bag, characterised in that the inlet region bounded by one or two fold lines that must unfold to enable gas to flow from the inlet region to the rest of the air-bag, the air-bag having a gas exhaust arrangement to exhaust gas from the inlet region of the air-bag in the event that high gas pressure should be experienced within the air-bag, wherein the gas supply arrangement includes a gas inlet pipe which extends into the interior of the air-bag; characterised in that the gas inlet pipe is associated with a cutter unit configured to cut the gas inlet pipe, the cutter unit being controlled in response to pressure within the inlet region of the air-bag.

Preferably the cutter unit is associated with a pilot conduit extending from the interior of the inlet region of the air-bag to the cutter unit to supply to the cutter unit a pilot pressure related to the pressure within the air-bag.

Advantageously the cutter unit incorporates a knife element moveable to cut the gas inlet pipe to cause gas to be exhausted from the gas supply structure.

Preferably the air-bag is folded, so that two initial fold-lines bound the inlet region of the bag into which gas is injected and from which gas may be exhausted by the exhaust arrangement.

Conveniently stitching or internal straps are provided to limit the thickness of the bag.

Advantageously the stitching or straps are tearable or yieldable, so that the stitching or straps release when subjected to high pressure.

In order that the invention may be more readily understood, and so that further features thereof may be appreciated, the invention will now be described, by way of example, with reference to the accompanying drawings in which:
FIGURE 1 is a diagrammatic view of a seat occupant and a typical prior proposed "bag-in-belt" air-bag, the air-bag being in the inflated state,
FIGURE 2 is a view of an air-bag showing the fabric of one side of the air-bag and an internal reinforcer, and also showing a stitching line and proposed fold-line,
FIGURE 3 is a view of the reinforcer of Figure 2,
FIGURE 4 is a view corresponding to Figure 1 illustrating an air-bag when inflated,
FIGURE 5 is a view corresponding to Figure 1 illustrating a modified air-bag,
FIGURE 6 is a further view corresponding to Figure 1 illustrating the air-bag of the invention; and
FIGURE 7 is a sectional view through part of the embodiment of Figure 6.

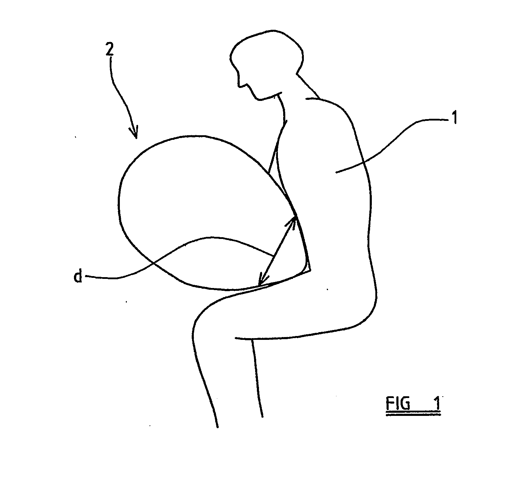

Referring initially to Figure 1 of the accompanying drawings, a seat occupant 1 is shown. The seat occupant is provided with a "bag-in-belt" air-bag, the air-bag being shown in the inflated form. It is to be noted that air-bag is fully inflated and is thus almost spherical. It is to be noted that the air-bag has a substantial dimension d, as illustrated by the double-headed arrow, in the region between the thighs and lower abdomen of the seat occupant.

Should the seat occupant be leaning forwardly at the instant that the air-bag is inflated, the air-bag may effectively be trapped between the thighs and the abdomen of the occupant. The air-bag would be expected to inflate rapidly to its full volume, but if this happens the air-bag will impart substantial injuries to the occupant, especially in the region of the lower abdomen which is a relatively soft part of the human body.

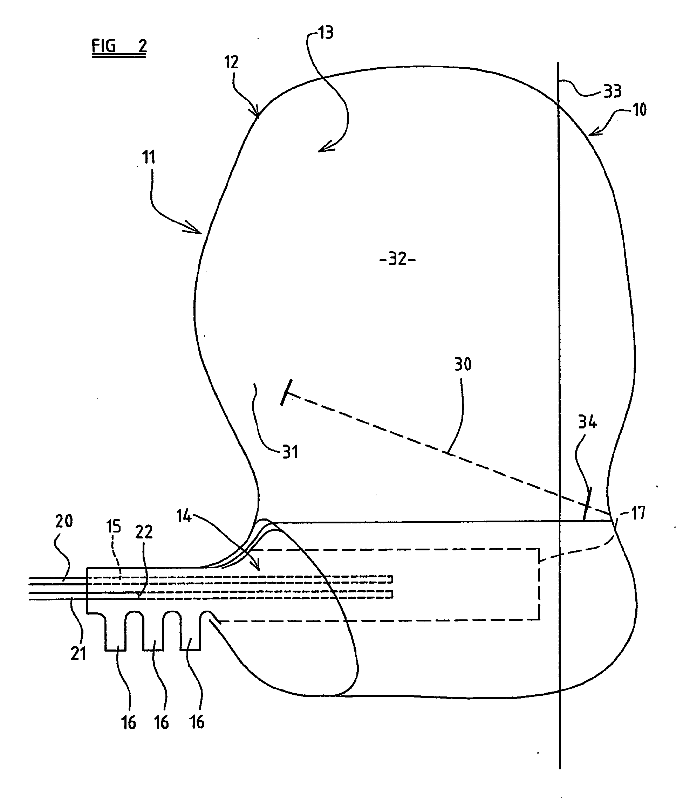

Figure 2 illustrates parts of an air-bag arrangement 10. The air-bag arrangement 10 incorporates an air-bag 11. The air-bag 11 is formed from two superimposed layers of fabric 12, 13 of identical shape. The invention may, of course, be applied to air-bags of a different design.

The air-bag 10 has a generally upright rectangular form when inflated. The lower part of the air-bag, as illustrated, is intended to be mounted to a safety-belt, so that the air-bag, when inflated is directly in front of the torso of the seat occupant.

The lower part of the air-bag, towards one side, is provided with an external fabric mounting element 14, which has a form similar to a funnel. The element 14 defines a protruding neck 15, the neck 15 being provided with a plurality of depending mounting tabs 16. The mounting tabs 16 maybe used to mount the entire air-bag to a safety-belt.

The neck 15, apart from providing a support for the complete bag, also accommodates a gas inlet, and a gas outlet.

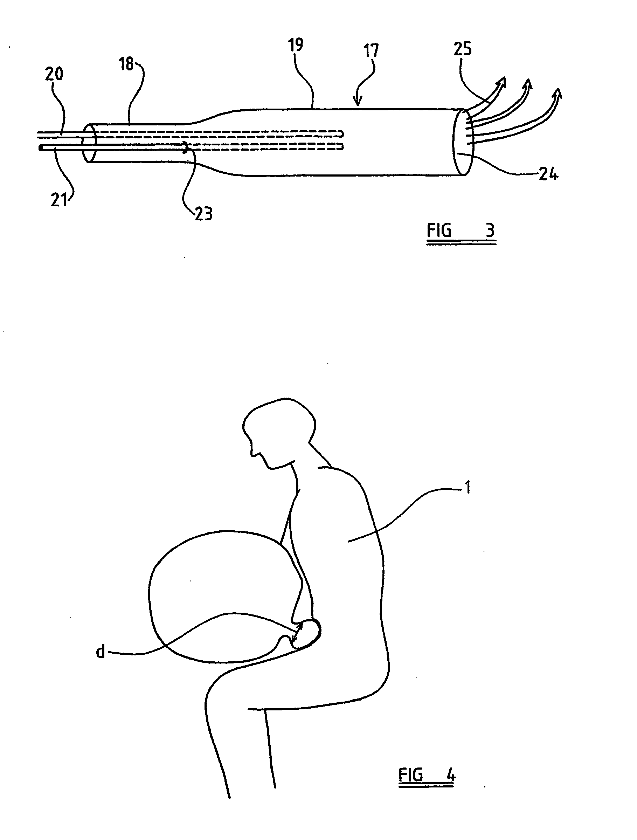

Extending into the neck 15 and also extending a substantial distance into the lower part of the air-bag, is an internal reinforcer 17. The reinforcer 17 is shown, perhaps more clearly, in Figure 3.

The reinforcer 17 is of generally cylindrical sleeve formed of fabric or the like. The sleeve is provided with a relatively narrow neck 18 which is accommodated within the neck 15 mentioned above, and a larger diameter cylindrical portion 19 which extends within the lower part of the air-bag.

A gas inlet pipe 20 is provided which extends from the exterior of the air-bag through the neck 18 into the larger diameter portion 19 of the sleeve 17.

A gas exhaust pipe 21 is also provided, the exhaust pipe extending adjacent the exterior of the mounting member 14 and subsequently passing through a slit 22 provided in the mounting member for that purpose, the exhaust pipe subsequently passing through a slit 23 formed in the reinforcer 17 and thus also extending into the enlarged diameter part 19 of the reinforcer.

In the preferred aspect the gas exhaust pipe 18 is made to be substantially rigid, which means to say that the pipe will not collapse when subjected to external pressure.

It is to be understood that in ordinary operation of the air-bag, gas will flow through the inlet 20, and will serve to inflate the fabric sleeve 17, so that gas may escape through the open end 24, of the sleeve 17, as indicated by the arrows 25.

In the described air-bag a line of stitching 30 is provided which extends in a generally diagonal direction part-way across the air-bag. The stitching serves to inter-connect the two layers of fabric that form the air-bag. The stitching originates at a point on the far side of the air-bag from the neck 15, at a point just above the reinforcer 17. The stitching extends upwardly across the air-bag back towards the side of the air-bag provided with the neck 13. The stitching terminates at a point which is spaced from the periphery of the air-bag. It is to be appreciated that the stitching 30 initially defines a chamber which contains the reinforcer 17, and which is thus positioned to receive gas through the inlet pipe 18. An outlet passage 31 is defined between the end of the stitching and the periphery of the air-bag, the outlet passage 31 leading to the main part or main chamber 32 of the air-bag.

It is to be appreciated that when the air-bag is folded the air-bag is initially folded about a vertical fold-line 33 which is located adjacent the end of the reinforcer 17 which is remote from the neck 15, and is subsequently folded about an orthogonal fold-line 34 which extends above the reinforcer 17. This folding defines an inlet region for gas, bounded by two fold lines, although the inlet region could be defined by a single fold line. The fold line or lines must unfold for the air-bag to inflate. It is thus to be understood that during this initial folding the reinforcer 17 is not folded. The air-bag is then subsequently folded or rolled in such a way that the folded or rolled air-bag is then packaged and may be mounted on a seat-belt.

The inlet pipe 20 may be formed of a fabric. The fabric may be such that the fabric will collapse when subjected to a high pressure. Thus the inlet pipe acts as a self-regulating one-way valve.

The exhaust pipe 21, however, is preferably formed of a more rigid tube, such that the tube will not readily collapse.

On deployment of the air-bag, gas is initially injected into the air-bag through the inlet pipe 20. The gas is injected with a substantial velocity and at a very high pressure. The gas will pass into the reinforcer 17 which will distend and thus initially tend to fill the inlet region of the air-bag which is bounded by the fold-lines 33 and 34. When the pressure within that part of the air-bag reaches an appropriate threshold, the pressure will be such as to cause the air-bag to begin to unfold, with the fold 34 initially being unfolded and the fold 33 subsequently being unfolded.

However, should the seat occupant be leaning forwardly to a very significant extent, such as, for example, if the seat occupant were leaning forward to tie their shoe laces, then the bag will not be able to unfold and pressure may begin to rise to an unacceptable level within the inlet region.

Should this situation obtain the very high pressure will be exhausted through the exhaust or outlet pipe 21 as the high pressure will mainly be within the reinforcer 17 and the rest of the inlet region and the outlet pipe 21 cannot collapse. The air-bag will not deploy in a way that may injure the seat occupant.

If the seat occupant is not leaning forwardly, the pressure will, as mentioned above, cause the fold-lines 34 and 33 to become unfolded. Gas will thus be injected into that part of the air-bag beneath the line of stitching 30 and will then flow through the passage 31 into the upper chamber 32. The presence of the line of stitching 30 will ensure that the lower-most part of the air-bag, that is to say the part of the air-bag which is closest to the reinforcer 17 and thus closest to the safety-belt upon which the air-bag is mounted, will not have a significant thickness, at least during the initial stages of deployment of the air-bag. Thus, as can be seen from Figure 4, the dimension d of the air-bag between the thighs and lower abdomen of the seat occupant 1 is significantly less than in the prior proposed arrangement illustrated in Figure 1.

The stitching 30 may be in the form of a tear-seam so that when the pressure within the main part of the air-bag reaches a predetermined threshold the seam will break, allowing the air-bag, during the final stages of deployment, to have a more spherical form equivalent to the prior proposal illustrated in Figure 1.

It is to be appreciated that in a modified air-bag the line of stitching 30 may be replaced by a line of internal straps of relatively short length, the straps being tear straps. Also it is to be understood that tear-seams or straps may be provided in a central region of the air-bag to limit the thickness of that part of the air-bag that will be in front of the chest of the seat occupant. The tear straps will break when there is a high pressure in the air-bag.

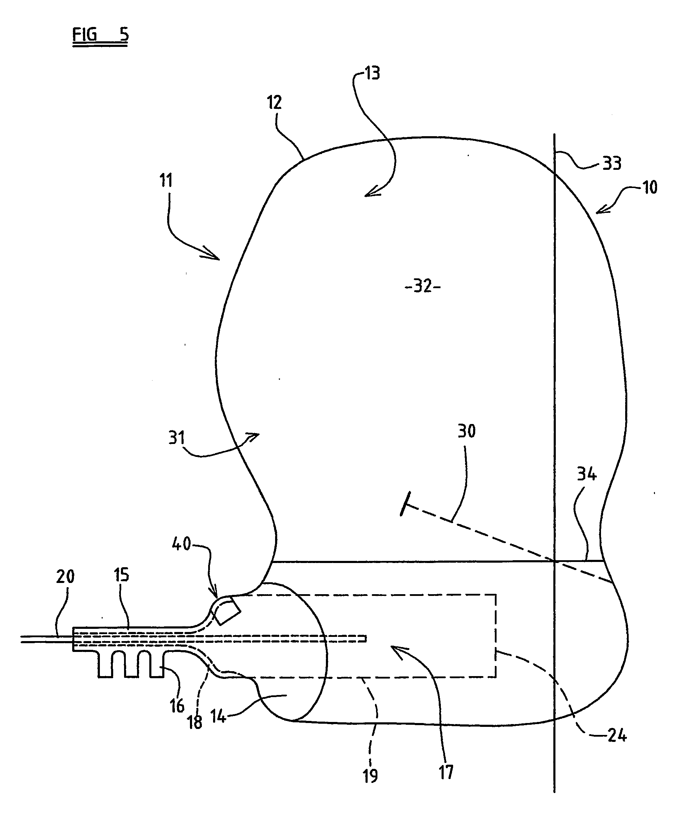

Figure 5 illustrates a modified air-bag. In the air-bag 10 as shown in Figure 5, several of the features are the same as in the air-bag described with reference to Figures 2 to 4. These features are provided with the same reference numerals as used previously and these features will not be redescribed. It is to be observed that the illustrated air-bag arrangement 10 again incorporates an air-bag 11 formed from two super-imposed layers of fabric 12, 13. The lower part of the air-bag is provided with the external fabric mounting element 14 as described above having a neck 15 and depending mounting tabs 16. Again an internal reinforcer is provided extending into the neck 15 and also extending into the lower part of the air-bag. A gas inlet pipe 20 is provided which extends from the exterior of the air-bag through the neck 18 of the reinforcer into the cylindrical portion 19. Again, in the described embodiment, flow passage 31 is provided defined between the end of the line of stitching 30 and the periphery of the air-bag.

In the air-bag arrangement of Figure 5 a double tear seam 40 is provided, the double tear seam comprising a tear seam in the mounting member 14 which is co-aligned with an inner tear seam provided in the reinforcer 17.

The co-aligned tear seams are adapted to tear and thus create an open vent, if a very high pressure of gas is present within the reinforcer 17.

It is to be appreciated that on deployment of the air-bag shown in Figure 5 gas initially injected into the air-bag through the inlet pipe 20. The gas passes into the reinforcer 17 which will distend and thus initially tend to fill the inlet region of the air-bag which is bounded by the fold lines 33 and 34. Some gas will flow through the open end 24 of the reinforcer 17. When the pressure within the inlet region of the air-bag reaches an appropriate threshold, the pressure will be such as to cause the air-bag to begin to unfold with the fold 34 initially being unfolded and the fold 33 subsequently being unfolded.

However, should the seat occupant be leaning forwardly to a very significant extent, the air-bag will not be able to unfold along the fold lines 33, 34 and thus a very high pressure will be generated within the reinforcer 17. The high pressure present within the reinforcer 17 will be sufficient to cause the super-imposed tear seams 40 to tear thus opening a vent. The vent extends between the interior of the reinforcer and the atmosphere, and thus gas is exhausted from the gas supply structure as a consequence of the high gas pressure being experienced within the inlet region of the air-bag.

It is to be understood that, in the circumstances described, the air-bag will not deploy in a way that will injure the seat occupant.

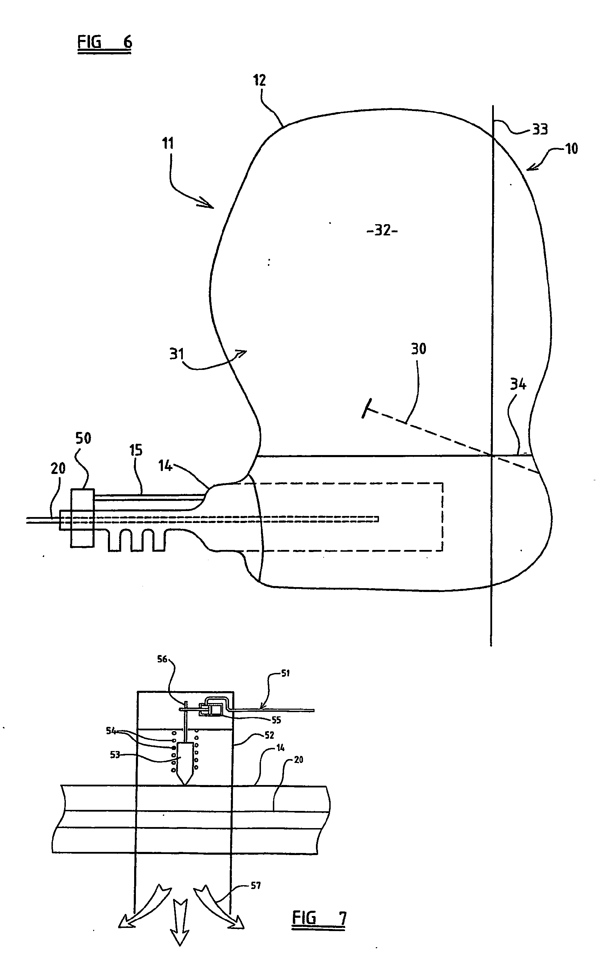

Turning now to Figure 6 an air-bag of the invention is illustrated. Again many of the features of the air-bag are the same as features of the air-bag shown in Figures 2 to 4 and these features will not be redescribed.

It is to be noted that in this particular air-bag of the invention there is not an internal reinforcer 17. Instead the gas inlet pipe 20 extends through the mounting member 14 and into the interior of the air-bag at a point within the inlet region of the air-bag bounded by the fold lines 33 and 34.

Mounted on the mounting member 14 is a cutter unit 50. The cutter unit 50 is associated with a pilot line 51 which extends into the inlet region of the air-bag through part of the mounting member 14. The pilot line 51 thus supplies a gas pressure to the cutter unit 50 which is proportional to the pressure experienced at any instant within the part of the air-bag bounded by the fold lines 33 and 34.

Figure 7 illustrates the cutter unit schematically. The cutter unit comprises a housing 52. The mounting element 14 and the gas inlet pipe 20 extend through the housing 52. Contained within the housing is a knife 53. The knife 53 is biased towards the mounting member 14 and the gas inlet pipe 20 means of a pre-stressed spring 54. The knife is retained in an initial position by a retainer 55. The retainer 55 is illustrated as being in the form of a piston and cylinder unit with the piston rod of the piston extending through an aperture formed in an arm 56 carried by the knife 53. The piston and cylinder unit is supplied with gas from the pilot line 51. The arrangement is such that when the pressure of gas supplied by the pilot line 51 exceeds the predetermined threshold the piston will move, thus withdrawing the piston rod from the arm 56 permitting the knife 53 to move under the bias supplied by the spring 54. As the knife moves the knife 53 will severe the mounting member 14 and also the gas inlet pipe 20. Gas being supplied to the air-bag arrangement 10 through the gas inlet pipe will then be exhausted through the lower part of the housing 52 as indicated schematically by the arrows 57. Of course, gas already present within the air-bag will also be exhausted by flowing in a reverse direction through the gas inlet pipe and also by flowing in reverse direction through the severed part of the mounting member.

It is thus again to be understood that if, during deployment of the air-bag pressure rises substantially within the inlet region bounded by the fold lines 33 and 34, as a consequence of the actuation of the cutter unit 50, the air-bag is prevented from deploying in a way that will cause injury to the seat occupant.

When used in this Specification and Claims, the terms "comprises" and "comprising" and variations thereof mean that the specified features, steps or integers are included. The terms are not to be interpreted to exclude the presence of other features, steps or components.

## Claims

1. An air-bag arrangement (10), the air-bag arrangement (10) incorporating an air-bag (11) and at least one mount (14) to mount the air-bag (11) on part of a safety-belt, the air-bag (11) being provided with a gas supply arrangement (20) to supply gas to an inlet region of the air-bag (11), the inlet region (15) bounded by one or two fold lines (33,34) that must unfold to enable gas to flow from the inlet region to the rest of the air-bag (11), the air-bag (11) having a gas exhaust arrangement (21) to exhaust gas from the inlet region of the air-bag (11) in the event that high gas pressure should be experienced within the air-bag (11), wherein the gas supply arrangement includes a gas inlet pipe (20) which extends into the interior of the air-bag (11); **characterised in that** the gas inlet pipe (20) is associated with a cutter unit (50) configured to cut the gas inlet pipe (20), the cutter unit (50) being controlled in response to pressure within the inlet region of the air-bag.

2. An air-bag arrangement according to Claim 1 wherein the cutter unit (50) is associated with a pilot conduit (51) extending from the interior of the inlet region of the air-bag to the cutter unit (50) to supply to the cutter unit (50) a pilot pressure related to the pressure within the air-bag.

3. An air-bag arrangement according to Claims 1 or 2 wherein the cutter unit (50) incorporates a knife element (53) moveable to cut the gas inlet pipe (20) to cause gas to be exhausted from the gas supply arrangement.

4. An air-bag arrangement according to any one of preceding Claims wherein the air-bag is folded, so that two initial fold-lines (33,34) bound the inlet region of the bag into which gas is injected and from which gas may be exhausted by the exhaust arrangement.

5. An air-bag arrangement according to any one of the preceding Claims wherein stitching or internal straps are provided to limit the thickness of the bag.

6. An air-bag arrangement according to Claim 5 wherein the stitching or straps are tearable or yieldable, so that the stitching or straps release when subjected to high pressure.

## Patentansprüche

1. Airbaganordnung (10), wobei die Airbaganordnung (10) einen Airbag (11) und mindestens eine Halterung (14) zur Montage des Airbags (11) an einem Tell des Sicherheitsgurtes beinhaltet, wobei der Airbag (11) mit einer Gaszufuhranordnung (20) versehen ist, um einem Einlassbereich des Airbags (11) Gas zuzuführen, wobei der Einlassbereich (15) von einer oder zwei Faltlinien (33, 34) begrenzt wird, die sich entfalten müssen, um dem Gas zu ermöglichen, von dem Einlassbereich in den übrigen Airbag (11) zu strömen, wobei der Airbag eine Gasauslassanordnung (21) besitzt, um Gas aus dem Einlassbereich des Airbags (11) auszulassen, falls ein hoher Gasdruck Innerhalb des Airbags (11) entstehen sollte, wobei die Gaszufuhranordnung ein Gaseinlassrohr (20) aufweist, das sich ins Innere des Airbags (11) erstreckt, **dadurch gekennzeichnet, dass** das Gaseinlassrohr (20) mit einer Schneldeeinhelt (50) verbunden ist, die so konfiguriert ist, dass sie das Gaseinlassrohr (20) schneidet, wobei die Schneideelnheit (50), in Reaktion auf Druck Innerhalb des Einlassbereiches des Airbags gesteuert wird.

2. Airbaganordnung nach Anspruch 1, wobei die Schneideeinheit (50) mit einer Vorsteuerleitung (51) verbunden ist, die sich vom Inneren des Eirliassbereiches des Airbags zur Schneideeinheit (50) erstreckt, um die Schneideeinheit (50) mit einem dem Druck im Airbag entsprechenden Vorsteuerdruck zu versorgen,

3. Airbaganordnung nach Ansprüchen 1 oder 2, wobei die Schneideeinheit (50) ein Klingenelement (53) beinhaltet, das beweglich ist, um das Gaseinlassrohr (20) zu schneiden, um das Gas aus der Gaszufuhrstruktur auslassen zu können.

4. Airbeganordnung nach einem der vorhergehenden Ansprüche, wobei der Airbag gefaltet Ist, so dass zwei Ausgengsfaltlinien (33, 34) den Einfassbereich des Airbags begrenzen, in den Gas einströmt und aus welchem Gas durch die Gasauslassanordnung ausgelassen werden kann.

5. Airbaganordnung nach einem der vorhergehenden Ansprüche, wobei Heftnahte oder innenliegende Riemen bereltgesteilt werden, um die Dicke des Airbags zu begrenzen.

6. Airbaganordnung nach Anspruch 5, wobei die Heftnähte oder Riemen zerreißbar oder elastisch verformbar sind, so dass sich die Heftnähte oder Riemen ablösen, wenn sie hohem Druck ausgesetzt werden.

## Revendications

1. Système de coussin de sécurité gonflable (10), le système de coussin de sécurité gonflable (10) comprenant un coussin de sécurité gonflable (11) et au moins une monture (14) pour monter le coussin de sécurité gonflable (11) sur une partie de la ceinture de sécurité, le coussin de sécurité gonflable (11) étant doté d'un système d'alimentation de gaz (20) pour alimenter du gaz à une région d'entrée de coussin de sécurité gonflable (11), la région d'entrée (15) étant délimitée par une ou deux lignes de pliage (33, 34) qui doivent se déplier pour permettre au gaz de s'écouler de la région d'entrée au reste du coussin de sécurité gonflable (11), le coussin de sécurité gonflable (11) ayant un système d'évacuation de gaz (21) pour évacuer le gaz par la région d'entrée du coussin de sécurité gonflable (11) dans le cas dans lequel une haute pression de gaz doit être ressentie dans le coussin de sécurité gonflable (11), dans lequel le système d'alimentation de gaz comprend un tuyau d'entrée de gaz (20) qui s'étend dans l'intérieur du coussin de sécurité gonflable (11); **caractérisé en ce que** le tuyau d'entrée de gaz (20) est associé à une unité de dispositif de coupe (50) configurée pour couper le tuyau d'entrée de gaz (20), l'unité de dispositif de coupe (50) étant commandée en réponse à la pression dans la région d'entrée du coussin de sécurité gonflable.

2. Système de coussin de sécurité gonflable selon la revendication 1, dans l'unité de dispositif de coupe (50) est associée à un conduit pilote (51) s'étendant de l'intérieur de la région d'entrée du coussin de sécurité gonflable à l'unité de dispositif de coupe (50) pour alimenter à l'unité de dispositif de coupe (50) une pression pilote liée à la pression dans le coussin de sécurité gonflable.

3. Système de coussin de sécurité gonflable selon la revendication 1 ou 2, dans lequel l'unité de dispositif de coupe (50) comprend un élément de lame (53) mobile pour couper le tuyau d'entrée de gaz (20) afin de provoquer l' évacuation du gaz par le dispositif d'alimentation de gaz.

4. Système de coussin de sécurité gonflable selon l'une quelconque des revendications précédentes, dans lequel le coussin de sécurité gonflable est plié, de sorte que deux lignes de pliage initiales (33, 34) délimitent la région d'entrée du coussin de sécurité dans laquelle le gaz est injecté et de laquelle le gaz peut être évacué par le système d'évacuation.

5. Système de coussin de sécurité gonflable selon l'une quelconque des revendications précédentes, dans lequel on prévoit une couture ou des sangles internes pour limiter l'épaisseur du coussin.

6. Système de coussin de sécurité gonflable selon la revendication 5, dans lequel la couture ou les sangles sont déchirables ou extensibles, de sorte que la couture ou les sangles se libèrent lorsqu'elles sont soumises à la haute pression.
